# EUROPÄISCHE PATENTANMELDUNG

(11) **EP 4 202 210 A1**
(43) Veröffentlichungstag der Anmeldung: **28.06.2023**
(21) Anmeldenummer: 22208773.6
(22) Anmeldetag: 22.11.2022
(51) Int. Cl.: F03D 13/20, E04H 12/34, F03D 13/40

(54) **SEGMENT UND SYSTEM FÜR EINE SCRUTON-WENDEL, SCRUTON-WENDEL, TURM UND VERFAHREN ZUR MONTAGE EINER SCRUTON-WENDEL**

(30) Priorität: 22.12.2021 DE 102021134258
(71) Anmelder: Nordex Energy SE & Co. KG, 22419 Hamburg (DE)
(72) Erfinder: Dikty, Dorothea, 22419 Hamburg (DE)
(74) Vertreter: Epping - Hermann - Fischer

(57) **Zusammenfassung**

Ein Segment für eine Scruton-Wendel (200) weist auf:
- einen Segmentkörper (203),
- eine Kopplungsvorrichtung (204) an dem Segmentkörper (203) zum Koppeln des Segments (201) mit einem weiteren Segment (202) für die Scruton-Wendel (200),
- eine Steckvorrichtung (205) an dem Segmentkörper (203) zum Koppeln des Segments (201) mit einem Seil (206). Außerdem werden ein System für eine Scruton-Wendel, eine Scruton-Wendel, ein Turm für eine Windenergieanlage und ein Verfahren zur Montage einer Scruton-Wendel angegeben.

## Beschreibung

Die Erfindung betrifft ein Segment für eine Scruton-Wendel, insbesondere eine Scruton-Wendel für einen Turm einer Windenergieanlage. Die Erfindung betrifft weiterhin ein System für eine Scruton-Wendel, insbesondere mit einem hier beschriebenen Segment. Die Erfindung betrifft weiterhin eine Scruton-Wendel, insbesondere eine Scruton-Wendel für einen Turm einer Windenergieanlage. Die Erfindung betrifft weiterhin einen Turm für eine Windenergieanlage, insbesondere einen Turm mit einer hier beschriebenen Scruton-Wendel. Die Erfindung betrifft zudem ein Verfahren zur Montage einer Scruton-Wendel.

Eine Windenergieanlage weist einen Rotor auf, mittels dessen Windenergie in ein Antriebsdrehmoment umgewandelt werden kann, das über einen Triebstrang einen Generator antreiben kann. Der Triebstrang, der Generator und andere Komponenten können in einer Gondel montiert sein, die auf einem Turm positioniert ist. Insbesondere während der Montage der Windenergieanlage, während die Gondel noch nicht auf dem Turm montiert ist, kann der Turm beispielsweise durch Wind ungewünscht in Schwingung versetzt werden.

Es ist wünschenswert, ein Segment für eine Scruton-Wendel anzugeben, das eine einfache und zuverlässigen Montage ermöglicht. Es ist zudem wünschenswert, ein System für eine Scruton-Wendel anzugeben, das eine einfache und zuverlässige Montage ermöglicht. Es ist zudem wünschenswert, eine Scruton-Wendel anzugeben, die eine einfache und zuverlässige Montage ermöglicht. Es ist zudem wünschenswert, einen Turm für eine Windenergieanlage anzugeben, bei dem einfach und zuverlässig unerwünschte Schwingungen reduziert sind. Es ist zudem wünschenswert, ein Verfahren zur Montage einer Scruton-Wendel anzugeben, das einfach und zuverlässig durchführbar ist.

Gemäß einer Ausführungsform weist ein Segment für eine Scruton-Wendel einen Segmentkörper auf. Das Segment weist eine Kopplungsvorrichtung an dem Segmentkörper auf. Die Kopplungsvorrichtung dient zum Koppeln des Segments mit einem weiteren Segment für die Scruton-Wendel. Das weitere Segment ist insbesondere baugleich zu dem Segment. Das Segment weist eine Steckvorrichtung an dem Segmentkörper auf. Die Steckvorrichtung dient zum Koppeln des Segments mit einem Seil.

Mittels einer Scruton-Wendel ist es möglich, Schwingungen zu verhindern, die während der Montage der Windenergieanlage, während die Gondel noch nicht auf dem Turm montiert ist, beispielsweise durch Wind angeregt werden. Beispielsweise wird mittels eines Systems während der Montage der Windenergieanlage eine Scruton-Wendel vorübergehend am Turm einer Windenergieanlage montiert.

Insbesondere ist das Segment ausgebildet, als Teil der Scruton-Wendel für einen Turm einer Windenergieanlage verwendet zu werden. Das Segment ist einfach und kosteneffizient herstellbar und transportierbar. Am Einsatzort kann das Segment einfach und zuverlässig mit dem Seil gekoppelt werden, um die Scruton-Wendel auszubilden. Die Kopplung mit weiteren Segmenten ist einfach und zuverlässig mittels der Kopplungsvorrichtung möglich, beispielsweise indem das Segment kraft- und/oder formschlüssig mit dem weiteren Segment verbunden wird. Somit ermöglicht das Segment eine schnelle und einfache Montage der Scruton-Wendel. Auch eine einfache Demontage ist möglich, beispielsweise da das Segment von dem Seil abziehbar ist. Das Segment ist mit einem geringen Gewicht ausbildbar.

Die Herstellung des Segments, beispielsweise ein Hohlblasverfahren, ermöglicht eine kostengünstige Herstellung. Das Segment ist wiederverwendbar und kann bei einer Vielzahl von Windenergieanlagen während der Montage verwendet werden.

Die Scruton-Wendel dient während der Montage und dem Aufbau der Windenergieanlage zur Dämpfung wirbelerregter Querschwingungen in der Errichtungsphase. Das Segment ist ausgebildet, als Teil der Scruton-Wendel Strömungen zu stören, die an dem zylindrischen Turm auftreten können. Beispielsweise weist das Segment hierfür einen dreiecksförmigen, T-förmigen, rechteckigen oder halbkreisförmigen Querschnitt auf. Auch andere Formen sind möglich. Das Segment ist beispielsweise Prisma-förmig.

Gemäß zumindest einer Ausführungsform weist die Steckvorrichtung einen vorspringenden Bereich auf. Der vorspringende Bereich ist ausgebildet, das Seil zu hinterhaken. Somit ist das Segment mittels des vorspringenden Bereichs auf das Seil aufbringbar und ein ungewünschtes Ablösen oder Abrutschen von dem Seil ist vermeidbar.

Gemäß zumindest einer Ausführungsform umgibt der vorspringende Bereich einen Seilkanal zumindest teilweise. Der Seilkanal ist ausgebildet, das Seil in einem montierten Zustand aufzunehmen, so dass das Segment entlang des Seils verschiebbar ist. Somit ist ein Aufstecken an einer beliebigen Stelle des Seils ermöglicht. Auch im montierten Zustand ist das Segment entlang des Seils verschiebbar und kann somit an einen gewünschten Ort des Seils gebracht werden.

Gemäß zumindest einer Ausführungsform weist die Steckvorrichtung einen Zugangsbereich auf. Mittels des Zugangsbereichs ist das Segment auf das Seil aufbringbar und von dem Seil entfernbar. Beispielsweise ist der Zugangsbereich neben dem vorspringenden Bereich angeordnet und ermöglicht ein Aufbringen des Segments auf das Seil an einer beliebigen Stelle des Seils. Das Seil ist durch den Zugangsbereich hindurch zu dem Seilkanal bringbar. An einer beliebigen Stelle des Seils kann das Segment auch von dem Seil entfernt werden, indem das Seil aus dem Seilkanal durch den Zugangsbereich hindurch von dem Segment entfernt wird.

Gemäß zumindest einer Ausführungsform weist der Seilkanal eine Haupterstreckungsrichtung auf. Der Zugangsbereich weist eine Haupterstreckungsrichtung auf. Die Haupterstreckungsrichtung des Seilkanals und die Haupterstreckungsrichtung des Zugangsbereichs schließen einen Winkel von größer als 0° ein. Die Haupterstreckungsrichtung des Seilkanals und die Haupterstreckungsrichtung sind nicht gleichgerichtet, sondern im Wesentlichen quer zueinander angeordnet, beispielsweise mit einem Winkel zwischen 70° und 110° zueinander, insbesondere 90° +/- 5°. Dies ermöglicht beispielsweise ein einfaches Einbringen des Seils durch den Zugangsbereich hindurch und nachfolgendes Anordnen des Seils im Seilkanal. Die unterschiedliche Ausrichtung der Haupterstreckungsrichtungen vermeidet ein unerwünschtes Austreten des Seils aus dem Seilkanal durch den Zugangsbereich hindurch aus dem Segment hinaus.

Zur Montage des Segments ist das Segment beispielsweise durch den Zugangsbereich hindurch auf das Seil aufbringbar und nachfolgend drehbar, so dass der Seilkanal auf das Seil geschoben wird und die Haupterstreckungsrichtung des Seilkanals mit einer Längsausdehnungsrichtung des Seils übereinstimmt. Die Haupterstreckungsrichtung des Zugangsbereichs weist dann ausreichend stark von der Längsausdehnungsrichtung des Seils ab, so dass ein unerwünschtes Austreten des Seils aus dem Segment vermieden wird.

Anstatt einer Kopplung des Segments mit dem Seil mittels Drehens sind alternativ oder zusätzlich auch andere Relativbewegungen zwischen dem Segment und dem Seil möglich. Beispielsweise wird das Segment quer zur Längsausdehnungsrichtung des Seils auf das Seil linear aufgeschoben und ohne eine zusätzliche Rotation so mit dem Seil verbunden.

Gemäß zumindest einer Ausführungsform weist der Segmentkörper eine Auflagefläche auf. Die Auflagefläche dient zur Auflage des Segments auf einem Untergrund, beispielsweise die Wandung des Turms der Windenergieanlage. Die Steckvorrichtung weist einen relativ zu der Auflagefläche zurückgesetzten Bereich auf. Der zurückgesetzte Bereich bildet teilweise den Seilkanal aus. Der zurückgesetzte Bereich bildet teilweise den Zugangsbereich aus. Das Segment ist somit verlässlich auf dem Untergrund abstützbar und mittels des Seils haltbar.

Gemäß zumindest einer Ausführungsform weist die Kopplungsvorrichtung einen Vorsprung und eine Ausnehmung auf. Der Vorsprung ist in eine Ausnehmung eines weiteren, insbesondere gleichartig aufgebauten Segments einbringbar zum Koppeln des Segments mit dem weiteren Segment. Insbesondere ist der Vorsprung an einer ersten Querseite des Segments angeordnet und die Ausnehmung an einer gegenüberliegenden Querseite des Segments. Der Vorsprung und die Ausnehmung weisen zueinander korrespondierende äußere Formen auf, so dass das Einstecken des Vorsprungs in die Ausnehmung des weiteren Segments möglich ist.

Beispielsweise sind die äußeren Formen des Vorsprungs und der Ausnehmung jeweils so gestaltet, dass ein Verdrehen des Segments relativ zu dem weiteren Segment mittels des Vorsprungs und der Ausnehmung im gekoppelten Zustand vermieden wird. Beispielsweise weisen der Vorsprung und die Ausnehmung jeweils eine Dreiecksform, eine Vierecksform oder eine andere Form auf, die die Rotation des Segments und des weiteren Segments relativ zueinander verhindern kann. Gemäß weiteren Ausführungsformen sind die äußeren Formen des Vorsprungs und der Ausnehmung jeweils so gestaltet, dass ein Verdrehen des Segments relativ zu dem weiteren Segment möglich ist.

Insbesondere ist die äußere Form so gestaltet, dass das Segment gegenüber dem weiteren Segment so weit gekippt werden kann, dass die mit den Segmenten gebildete Scruton-Wendel um den Turm gelegt werden kann.

Der Segmentkörper ist beispielsweise ein blasgeformter Kunststoffhohlkörper oder weist einen blasgeformten Kunststoffhohlkörper auf. Somit ist das Segment mit vergleichsweise geringem Gewicht kostengünstig herstellbar.

Gemäß einer Ausführungsform weist ein System für eine Scruton-Wendel ein Seil auf. Das System weist eine Mehrzahl von den hier beschriebenen Segmenten auf. Die Segmente sind jeweils mit dem Seil koppelbar. Die Segmente sind jeweils miteinander koppelbar. Das System ist bei einer Vielzahl von Windenergieanlagen wiederverwendbar und kann einfach als Scruton-Wendel montiert und demontiert werden.

Gemäß einer Ausführungsform weist eine Scruton-Wendel ein hier beschriebenes System auf. Die Segmente des Systems sind mit dem Seil gekoppelt. Jeweils unmittelbar benachbarte Segmente sind miteinander gekoppelt. Die Segmente sind auf das Seil aufgesteckt und von dem Seil gehalten. Die Segmente sind miteinander mittels den jeweiligen Kopplungsvorrichtungen gekoppelt, so dass aus den einzelnen Segmenten die Scruton-Wendel gebildet ist.

Gemäß einer Ausführungsform weist ein Turm für eine Windenergieanlage eine hier beschriebene Scruton-Wendel auf. Die Scruton-Wendel ist spiralförmig um den Turm herum angeordnet. Die Scruton-Wendel ist aus den Segmenten und dem Seil einfach herstellbar und flexibel an dem Turm montierbar. Beispielsweise ist es auch möglich, einzelne Segmente von dem spiralförmig am Turm angeordneten Seil zu entfernen und auszutauschen. Die Scruton-Wendel dämpft Querschwingungen des Turms.

Gemäß einer Ausführungsform umfasst ein Verfahren zur Montage einer Scruton-Wendel ein Bereitstellen eines hier beschriebenen Segments und eines Seils. Das Segment wird auf das Seil aufgesteckt. Das Segment wird relativ zu dem Seil gedreht und dadurch mit dem Seil gekoppelt. Das Segment ist mittels des Aufsteckens und Drehens einfach und flexibel mit dem Seil koppelbar. Insbesondere kann das Segment an einer beliebigen Stelle des Seils mit dem Seil gekoppelt werden.

Gemäß zumindest einer Ausführungsform umfasst das Verfahren ein Bereitstellen von mindestens einem weiteren hier beschriebenen Segment. Beispielsweise wird eine Mehrzahl von den hier beschriebenen Segmenten bereitgestellt. Das weitere Segment wird auf das Seil aufgesteckt. Das weitere Segment wird relativ zum Seil gedreht und dadurch mit dem Seil gekoppelt. Das Segment und das weitere Segment werden relativ zueinander entlang des Seils verschoben. Das Segment und das weitere Segment werden in einem mit dem Seil gekoppelten Zustand miteinander gekoppelt. Somit sind mittels des Aufsteckens und Drehens und des nachfolgenden Verschiebens das Segment und das weitere Segment sowohl mit dem Seil als auch miteinander verbunden.

Weitere Vorteile, Merkmale und Weiterbildungen ergeben sich aus den nachfolgenden in Verbindung mit den Figuren erläuterten Ausführungsbeispielen. Gleiche, gleichartige und gleich wirkende Elemente können mit den gleichen Bezugszeichen versehen sein.

Es zeigen:
Figur 1 eine schematische Darstellung einer Windenergieanlage gemäß einem Ausführungsbeispiel,
Figur 2 eine schematische Darstellung eines Segments und eines Seils gemäß einem Ausführungsbeispiel,
Figur 3 eine schematische Darstellung eines Systems gemäß einem Ausführungsbeispiel,
Figur 4 eine schematische Darstellung einer Schnittansicht eines Segments gemäß einem Ausführungsbeispiel und
Figur 5 eine schematische Darstellung eines Flussdiagramms eines Verfahrens gemäß einem Ausführungsbeispiel.

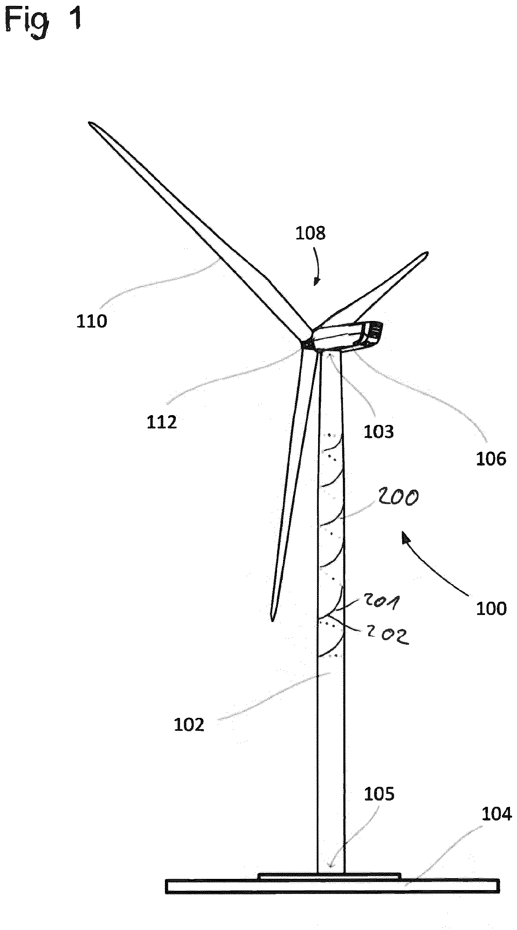

Figur 1 zeigt eine schematische Darstellung einer Windenergieanlage 100 gemäß einem Ausführungsbeispiel. Die Windenergieanlage 100 weist einen Turm 102 auf. Der Turm 102 ist an einem Ende 105 des Turms 102 mittels eines Fundaments 104 auf einem Untergrund befestigt. An einem dem Untergrund gegenüberliegenden Ende 103 des Turms 102 ist eine Gondel 106 drehbar gelagert. Die Gondel 106 weist beispielsweise einen Generator auf, der über einen Triebstrang mit einem Rotor 108 gekoppelt ist. Der Triebstrang weist beispielsweise eine Rotorwelle, ein Getriebe, eine Kupplung, eine Rotorbremse und sonstige Komponenten auf (nicht explizit dargestellt). Der Rotor 108 weist beispielsweise ein oder mehrere Rotorblätter 110 auf, die an einer Rotornabe 112 angeordnet sind. Die Rotornabe 112 wiederum ist mit der Rotorwelle verbunden.

Insbesondere während der Montage der Windenergieanlage 100, beispielsweise bevor die Gondel 106 an dem Ende 103 des Turms 102 angebracht wird oder bevor der Rotor 108 an der Rotornabe 112 montiert ist, können an dem Turm 102 durch Luftströmungen Querschwingungen auftreten. Zur Dämpfung solcher wirbelerregter Querschwingungen ist an dem Turm eine Scruton-Wendel 200 angebracht. Die Scruton-Wendel wird insbesondere nach Abschluss der Montage der Windenergieanlage 100 wieder entfernt, beispielsweise nachdem die Gondel 106 an dem Ende 103 des Turms 102 angeordnet und nachdem der Rotor 108 montiert wurde.

Die Scruton-Wendel 200 umgibt den Turm 102 spiralförmig. Entlang der Längsrichtung des Turms 102 ist die Scruton-Wendel 200 beispielsweise vollständig entlang des Turms 102 angeordnet oder nur teilweise. Beispielsweise ist die Scruton-Wendel 200 in einem dem ersten Ende 103 des Turms 102 zugewandten Bereich angeordnet, in dem vermehrt Querschwingungen angeregt werden. Die Scruton-Wendel erstreckt sich beispielsweise über mindestens ein Viertel der Länge des Turms 102, über mindestens die Hälfte des Turms 102 oder über mindestens zwei Drittel des Turms 102. Auch andere Möglichkeiten der Ausdehnung der Scruton-Wendel 200 sind möglich. Die Scruton-Wendel 200 kann aus einem Strang oder mehreren Strängen bestehen, wobei mehrere Stränge jeweils gleichartig gemäß der vorliegenden Offenbarung aufgebaut sind.

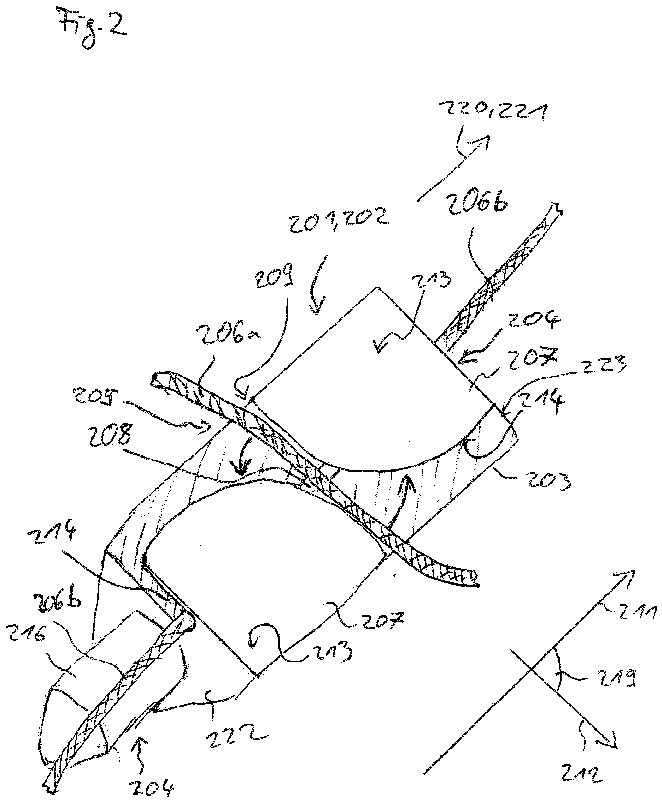

Wie nachfolgend auch in Verbindung mit den Figuren 2 bis 4 näher erläutert wird, ist die Scruton-Wendel 200 aus einer Mehrzahl von Segmenten 201, 202 gebildet.

Figur 2 zeigt eine schematische Darstellung eines Segments 201, 202. Die Segmente 201, 202 der Scruton-Wendel 200 sind insbesondere baugleich. Die einzelnen Merkmale der Segmente 201, 202 können daher nachfolgend auch nur an dem Segment 201 erläutert werden.

Das Segment 201 ist insbesondere aus Kunststoff gebildet. Beispielsweise ist das Segment 201 mittels Blasformen mit thermoplastischen Kunststoffen mit geringer Wandstärke hergestellt. Somit ist ein Segmentkörper 203 ausgebildet. Das Segment 201 weist beispielsweise eine Länge entlang einer Längsrichtung 220 des Segments 201 von 0,5 Meter oder 0,6 Meter bis 2 Meter auf, insbesondere eine Länge von 1,0 Meter bis 1,5 Meter. Das Segment 201 weist beispielsweise eine Höhe quer zu der Längsrichtung 220 des Segments 201 von 0,3 Meter bis 1 Meter auf, insbesondere eine Höhe von 0,5 Meter bis 0,75 Meter, beispielsweise 0,6 Meter.

An dem Segmentkörper 203 ist eine Kopplungsvorrichtung 204 ausgebildet. Die Kopplungsvorrichtung 204 dient zum Koppeln des Segments 201 mit mindestens einem weiteren Segment 201, 202. Insbesondere ist entlang einer Längsausdehnungsrichtung 221 des Segmentkörpers 203 das Segment 201 an einer ersten Seite 222 mit einem weiteren Segment 202 koppelbar und an einer gegenüberliegenden zweiten Seite 223 ebenfalls mit einem weiteren Segment 202 koppelbar.

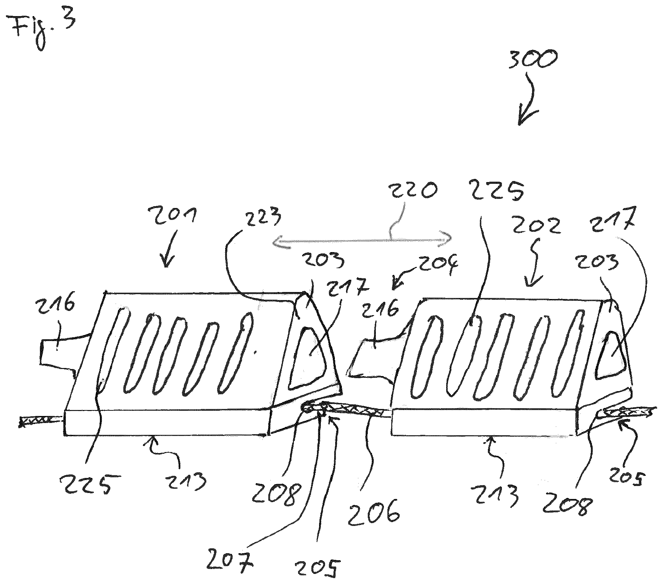

Die Kopplungsvorrichtung 204 weist im dargestellten Ausführungsbeispiel einen Vorsprung 216 auf. Der Vorsprung 216 ist an der ersten Seite 222 ausgebildet. Wie sich insbesondere auch aus Figur 3 ergibt, weist die Kopplungsvorrichtung 204 eine Ausnehmung 217 auf. Die Ausnehmung 217 ist an der zweiten Seite 223 ausgebildet. Der Vorsprung 216 des Segments 201 ist in die Ausnehmung 217 des weiteren Segments 202 einsteckbar, um die Verbindung zwischen den beiden Segmenten 201, 202 auszubilden.

Der Vorsprung 216 und die Ausnehmung 217 weisen zueinander korrespondierende Formen auf, sodass die Steckverbindung ausbildbar ist. Die Form des Vorsprungs 216 und die Form der Ausnehmung 217 sind gemäß Ausführungsbeispielen so gestaltet, dass ein Verdrehen der beiden Segmente 201, 202 relativ zueinander um die Längsausdehnungsrichtung 221 vermieden wird. Beispielsweise ist der Vorsprung 216 Prisma-förmig ausgestaltet. Der Vorsprung 216 weist beispielsweise die Form eines Mehrecks auf, beispielsweise dreiecksförmig, vierecksförmig oder mit einer anderen Form, die das Verdrehen verhindert. Gemäß weiteren Ausführungsbeispielen weisen der Vorsprung 216 und die Ausnehmung 217 Formen auf, die ein relatives Verdrehen zueinander zulassen. Beispielsweise wird ein Verdrehen der Segmente 201, 202 relativ zueinander durch die Auflage an dem Turm 102 vermieden.

Der Querschnitt des Vorsprungs 216 quer zur Längsausdehnungsrichtung 221 ist insbesondere kleiner als der Querschnitt des Hauptsegmentkörpers 203 quer zur Längsausdehnungsrichtung 221. Der Querschnitt des Vorsprungs 216 quer zur Längsausdehnungsrichtung 221 ist insbesondere zentrisch bezogen auf den Querschnitt des Hauptsegmentkörpers 203 quer zur Längsausdehnungsrichtung 221.

Der Vorsprung 216 und die Ausnehmung 217 sind insbesondere so geformt, dass das Segment 201 gegenüber dem weiteren Segment 202 so weit gekippt werden kann, dass die mit den Segmenten 201, 202 gebildete Scruton-Wendel 200 um den Turm 102 gelegt werden kann

Der Segmentkörper 203 weist eine Steckvorrichtung 205 auf. Die Steckvorrichtung 205 dient zum Koppeln und Verbinden des Segments 201 mit einem Seil 206. Das Segment 201 und die weiteren Segmente 201, 202 werden mit dem Seil gekoppelt, um die Scruton-Wendel 200 auszubilden. Die Steckvorrichtung 205 ist ausgebildet, dass das Segment 201 nicht nur an einem Ende des Seils 206 mit dem Seil 206 koppelbar ist, sondern auch in einem beliebigen Bereich entlang des Seils 206. Die Steckvorrichtung 205 ist ausgebildet, dass das Segment 201 in einer ersten Ausrichtung auf das Seil 206 aufbringbar ist. Die Steckvorrichtung 205 ist ausgebildet, dass das Segment 201 relativ zu dem Seil 206 drehbar ist, um mit dem Seil 206 gekoppelt zu werden. Im betriebsfertigen Zustand weist das Segment 201 eine zweite Ausrichtung relativ zu dem Seil 206 auf, in der die Längsausdehnungsrichtung 221 des Segments 201 insbesondere gleichgerichtet ist zu der Längsausdehnungsrichtung 220 des Seils 206.

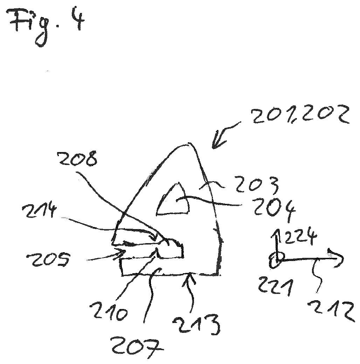

Die Steckvorrichtung 205 weist einen vorspringenden Bereich 207 auf. Der vorspringende Bereich 207 ist im dargestellten Ausführungsbeispiel in zwei Teilbereiche aufgegliedert. Entlang der Längsausdehnungsrichtung 221 ist zwischen den beiden vorspringenden Bereichen 207 ein Zugangsbereich 209 ausgebildet. Das Seil 206 ist durch den Zugangsbereich 209 hindurch in Richtung eines Seilkanals 208 verschiebbar. Durch das Drehen des Segments 201 relativ zu dem Seil 206 ist das Seil 206 hinter den vorspringenden Bereich 207 bringbar. Der vorspringende Bereich 207 weist beispielsweise eine Nase 210 auf (Figur 4). Mittels der Nase 210 ist ein ungewolltes Abrutschen oder Austreten des Seils 206 aus dem gekoppelten Zustand vermeidbar. Im gekoppelten Zustand ist das Seil 206 zwischen dem vorspringenden Bereich 207 und einem zurückgesetzten Bereich 214 des Segmentkörpers 203 angeordnet. Somit kann sich das Segment 201 nicht mehr ohne weiteres von dem Seil 206 lösen.

Figur 2 zeigt das Segment 201 und das Seil 206 in zwei Zuständen. Im ersten Zustand ist das Seil 206 als Seil 206a bezeichnet. Im zweiten Zustand ist das Seil 206 als Seil 206b bezeichnet. Zur Montage des Segments 201 mit dem Seil 206 wird das Segment 201 relativ zu dem Seil in der Position 206a auf das Seil aufgesteckt. Nachfolgend wird das Segment 201 relativ zu dem Seil 206 gedreht, wie durch die Pfeile in der Figur 2 symbolisiert. Im montierten Zustand ist das Segment 201 dann relativ zu dem Seil 206 in der Position des Seils 206b angeordnet.

Die Kopplung des Segments 201 mit dem Seil 206 mittels Drehen ermöglicht eine einfache und zuverlässige Montage des Segments 201 an einer beliebigen Stelle des Seils 206. Zum Aufbringen des Segments 201 auf das Seil 206 wird das Seil in dem Zugangsbereich 209 in Richtung des zurückgesetzten Bereichs 214 aufgebracht. Der Zugangsbereich weist hierfür eine erste Haupterstreckungsrichtung 212 auf. Die erste Haupterstreckungsrichtung 212 ist insbesondere nicht gleich zu der Längsausdehnungsrichtung 221 des Segments 201. Die Haupterstreckungsrichtung 212 des Zugangsbereichs ist insbesondere auch unterschiedlich zu einer Haupterstreckungsrichtung 211 des Seilkanals 208. In dem Seilkanal 208 ist das Seil im montierten Zustand 206b innerhalb des Segments 201 geführt.

Die Haupterstreckungsrichtung 211 des Seilkanals und die Haupterstreckungsrichtung 212 des Zugangsbereichs schließen einen Winkel 219 miteinander ein. Insbesondere ist der Winkel 219 größer als 0°, sodass die Haupterstreckungsrichtung 211 des Seilkanals nicht gleichgerichtet zur Haupterstreckungsrichtung 212 des Zugangsbereichs verläuft.

Der Winkel 219 ist beispielsweise 90° +/- 5°. Die Haupterstreckungsrichtung 211 des Seilkanals 208 ist im gekoppelten Zustand gleichgerichtet zur Längsausdehnungsrichtung 220 des Seils 206 und zur Längsausdehnungsrichtung 221 des Segments 201.

Das Segment wird mit einer Ausrichtung der Haupterstreckungsrichtung 211 des Seilkanals quer zur Längsausdehnungsrichtung 220 des Seils 206 auf das Seil aufgesteckt. Nachfolgend wird das Segment 201 gedreht, bis die Haupterstreckungsrichtung 211 des Seilkanals 208 und die Längsausdehnungsrichtung 220 des Seils 206 gleichgerichtet sind.

Figur 3 zeigt ein System 300 zum Ausbilden der Scruton-Wendel 200. Das System 300 weist eine Vielzahl von Segmenten 201, 202 auf, von denen exemplarisch zwei Segmente 201, 202 in Figur 3 dargestellt sind. Die Segmente 201, 202 sind jeweils mittels der zugehörigen Steckvorrichtung 205 auf das Seil 206 aufgesteckt und mit dem Seil 206 gekoppelt. Zur Kopplung der Segmente 201, 202 miteinander werden die Segmente 201, 202 entlang der Längsausdehnungsrichtung 220 des Seils 206 aufeinander zugeschoben, so dass beispielsweise der Vorsprung 216 des weiteren Segments 202 in die Ausnehmung 217 des Segments 201 eingesteckt wird. Somit sind die beiden Segmente 201, 202 miteinander gekoppelt.

Zur Vervollständigung der Scruton-Wendel 200 werden nach und nach die einzelnen Segmente 201, 202 mittels der Steckvorrichtung 205 mit dem Seil 206 gekoppelt und nachfolgend mit den jeweiligen Kopplungsvorrichtungen 204 die jeweils unmittelbar nebeneinander angeordneten Segmente 201, 202 miteinander verbunden. Die jeweiligen Vorsprünge 216 und die jeweiligen Ausnehmungen 217 sind dabei relativ zueinander so ausgestaltet, dass ausreichend Spiel vorhanden ist, um die Segmente 201, 202 spiralförmig um den Turm 102 herum anzuordnen.

In Figur 3 sind Verstärkungsrippen 225 dargestellt. Gemäß weiterer Ausführungsbeispiele kann auf die Verstärkungsrippen 225 verzichtet werden. Die Ausgestaltung und die Anzahl der Verstärkungsrippen 225 werden in Abhängigkeit beispielsweise von der Größe und dem Gewicht des Segments 201 vorgegeben. Die Verstärkungsrippen 225 verstärken die Wände des Segments 201 und stabilisieren das Segment 201. Die Verstärkungsrippen 225 sind beispielsweise aus der Wand des Segments 201 ausgeformt und werden während der Herstellung des Segments 201 ausgebildet. Alternativ oder zusätzlich sind die Verstärkungsrippen 225 separate Bauelemente, die nachträglich an dem Segment angebracht werden, beispielsweise aufgeklebt.

Figur 4 zeigt einen Querschnitt des Segments 201 quer zur Längsausdehnungsrichtung 221 des Segments 201. Das Segment 201 weist im dargestellten Ausführungsbeispiel eine dreieckige Grundform auf. Auch andere Formen sind möglich, die die Ausbildung einer Wirbelstraße ausreichend unterdrücken können. Insbesondere ist der Querschnitt so ausgestaltet, dass an einer im montierten Zustand dem Turm 102 zugewandten Seite eine Auflagefläche 213 ausgebildet ist.

Das Segment 201 ist im montierten zustand mit der Auflagefläche 213 im Kontakt mit dem Turm 102. Die Auflagefläche 213 ist an dem vorspringenden Bereich 207 ausgebildet. Der Seilkanal 208 ist, entlang einer Hochrichtung 224 der Figur 4 betrachtet, die quer zur Haupterstreckungsrichtung 212 des Zugangsbereichs 205 und zur Längsausdehnungsrichtung 221 des Segments 201 verläuft, zwischen dem vorspringenden Bereich 207 und dem zurückgesetzten Bereich 214 angeordnet. Entlang der Haupterstreckungsrichtung 212 des Zugangsbereichs 205 ist der Seilkanal 208 neben der Nase 210 ausgebildet. Zur Montage muss somit das Seil 206 über einen leichten Widerstand hinweg über die Nase 210 in den Seilkanal 208 hineingeschoben werden. Die Nase 210 bildet danach genügend mechanischen Widerstand, um ein ungewolltes Austreten des Seils 206 aus dem Seilkanal 208 hinaus zu vermeiden.

Die Querschnittsform der Kopplungsvorrichtung 204 und des Segmentkörpers 203 können gleichartig sein, beispielsweise wie im dargestellten Ausführungsbeispiel jeweils dreiecksförmig. Die beiden Formen können auch voneinander abweichen, so dass der Segmentkörper 203 eine andere Querschnittsform aufweist als die Kopplungsvorrichtung 204. Beispielsweise kann die Kopplungsvorrichtung 204 in Form eines Rechtecks ausgebildet sein und der Segmentkörper 203 eine T-Form aufweisen.

Die Drehachse zum Koppeln des Segments 201 mit dem Seil 206 ist beispielsweise in einem Winkel von 90° zur Längsausdehnungsrichtung 220 des Seils ausgerichtet. Beispielsweise ist die Drehachse zum Koppeln des Segments 201 mit dem Seil 206 gleichgerichtet zur Hochrichtung 224. Das Segment 201 wird um die Drehachse gedreht, um mit dem Seil 206 gekoppelt zu werden. Die Drehachse verläuft quer zur Haupterstreckungsrichtung 211 des Seilkanals 208 und quer zur Haupterstreckungsrichtung 212 des Zugangsbereichs 209.

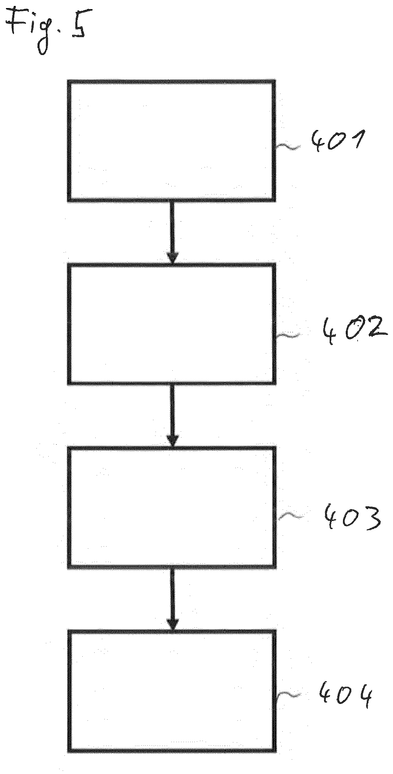

Figur 5 zeigt eine schematische Darstellung eines Flussdiagramms eines Verfahrens zur Montage der Scruton-Wendel 200.

In Schritt 401 wird das Segment 201 oder eine Mehrzahl von Segmenten 201, 202 bereitgestellt. Zudem wird das Seil 206 bereitgestellt. Beispielsweise wird das Seil 206 spiralförmig um eine zur Vorbereitung der Montage bereitgestellte, horizontal abgestützt liegende Sektion für den Turm 102 herumgewickelt und ein Ende des Seils 206 an dem Turm 102 entsprechend befestigt.

In Schritt 402 wird das Segment 201 oder die Segmente 201, 202 jeweils auf das Seil 206 aufgesteckt. Die Segmente 201, 202 werden in der Ausrichtung auf das Seil aufgesteckt, die in Figur 2 dem Seil 206a entspricht. Die Segmente 201, 202 werden jeweils nacheinander auf das Seil 206 aufgesteckt in einer Ausrichtung, in der die jeweilige Haupterstreckungsrichtung 211 des Seilkanals 208 von der Längsausdehnungsrichtung 220 des Seils 206 abweicht.

Nach dem Aufstecken des Segments 201 auf das Seil 206 wird das Segment 201 in Schritt 403 relativ zu dem Seil 206 gedreht und dadurch mit dem Seil 206 gekoppelt. Das entspricht in Figur 2 der als Seil 206b dargestellten Ausrichtung. Insbesondere wird jedes der Segmente 201, 202 nach dem Aufstecken unmittelbar gedreht, um mit dem Seil 206 gekoppelt zu werden. Das Segment 201 wird also beispielsweise zunächst mit dem Seil 206 gekoppelt, bevor das weitere Segment 202 auf das Seil 206 aufgesteckt wird.

In Schritt 404 werden dann das Segment 201 und das weitere Segment 202, das unmittelbar neben dem Segment 201 angeordnet ist, relativ zueinander entlang der Längsausdehnungsrichtung 220 des Seils 206 aufeinander zugeschoben, bis der Vorsprung 216 des einen Segments 201, 202 in die Ausnehmung 217 des anderen Segments 201, 202 eingreift und die Steckverbindung zwischen den beiden Segmenten 201, 202 ausgebildet ist. Beispielsweise werden die beiden unmittelbar benachbarten Segmente 201, 202 mittels der Kopplungsvorrichtung 204 miteinander gekoppelt, bevor ein weiteres Segment 201 auf das Seil aufgesteckt wird. Es ist auch möglich, zunächst eine Mehrzahl von Segmenten 201, 202 auf das Seil aufzustecken und nachfolgend die Segmente 201, 202 aufeinander zuzuschieben und dabei die Steckverbindungen zwischen den Segmenten 201, 202 auszubilden.

Nachdem alle vorgesehenen Segmente 201, 202 auf das Seil aufgesteckt und miteinander verbunden sind, wird auch das zweite Ende des Seils 206 an der horizontal abgestützt liegenden Sektion für den Turm 102 befestigt. Anschließend kann die Sektion für den Turm 102 aus der horizontalen in eine vertikale Lage gebracht und auf den bereits teilweise montierten Turm 102 aufgesetzt und mit diesem verbunden werden.

Das System 300 ermöglicht die Scruton-Wendel 200, die einfach und verlässlich zur Dämpfung von wirbelerregten Querschwingungen an dem Turm 102 einsetzbar ist. Die Segmente 201, 202 des Systems 300 sind als Hohlkörper ausgebildet. Die Segmente 201, 202 können quer zur Längsausdehnungsrichtung 220 des Seils 206 auf das Seil aufgesetzt werden, und dann beispielsweise um 90° gedreht werden, um die Segmente 201, 202 jeweils formschlüssig mit dem Seil 206 zu koppeln. Die Längsausdehnungsrichtung 221 des Segments 201, 202 ist dann in Laufrichtung des Seils 206 ausgerichtet. Die Laufrichtung des Seils 206 entspricht auch der Längsausdehnungsrichtung 220 des Seils 206.

Der Seilkanal 208 ist zwischen dem vorspringenden Bereich 207 und dem zurückgesetzten Bereich 214 ausgebildet. Beispielsweise ist die Nase 210 angeordnet. Während der Montage muss das Seil 206, bis es seine Endposition erreicht hat, einen Widerstand überwinden, beispielsweise durch eine gegenüber dem Seil 206 geringere Spaltbreite zwischen dem zurückgesetzten Bereich 214 und dem vorspringenden Bereich 207. Ist das Seil 206 in der gewünschten Endposition, läuft es leicht durch den Seilkanal 208, so dass das Verschieben der Segmente 201, 202 relativ zum Seil 206 möglich ist.

Der zapfenförmige Vorsprung 216 ist an der einen Stirnseite des Segments 201, 202 ausgebildet. Auf der anderen Stirnseite des Segments 201, 202 ist die Ausnehmung 217 ausgebildet. Der Vorsprung 216 kann einen runden oder einen anderen Querschnitt haben, der insbesondere ein Verdrehen der benachbarten Segmente zueinander verhindert. Die einzelnen Segmente 201, 202 werden nach dem Aufsetzen auf das Seil in Längsrichtung entlang des Seils ineinandergeschoben.

Der Vorsprung 216 und die Ausnehmung 217 sind beispielsweise mit größerer Toleranz zueinander ausgebildet, um die Wendelform um den Turm 102 herum zu ermöglichen. Dies ermöglicht eine geringere Lagerdichte. Es ist auch möglich, durch eine entsprechende Winkelung des Vorsprungs 216 und/oder der Ausnehmung 217 zur Längsausdehnungsrichtung 221 des Segments 201, 202 die Steigung der Wendel beziehungsweise der Spiralform der Scruton-Wendel 200 vorzugeben.

Zur Demontage der Scruton-Wendel 200 sind die einzelnen Segmente 201, 202 beispielsweise in Längsrichtung von dem Seil ziehbar. Es ist auch möglich, einzelne Segmente in Zwischenbereichen der Scruton-Wendel 200 zu entfernen, indem sie relativ zu dem Seil gedreht werden in die entgegengesetzte Richtung wie zur Montage und dann vom Seil 206 abgenommen werden.

Das System 300 ermöglicht eine schnelle Montage der Scruton-Wendel 200. Ebenso wird eine schnelle Demontage ermöglicht. Die Scruton-Wendel 200 weist insgesamt ein geringes Gewicht auf. Die Segmente 201, 202 und die Scruton-Wendel 200 sind kostengünstig herstellbar. Insgesamt wird ein einfaches und zuverlässiges System 300 zur Dämpfung von wirbelerregten Querschwingungen bei der Windenergieanlage 100 in der Errichtungsphase angegeben.

### Bezugszeichen

- 100: Windenergieanlage
- 102: Turm
- 103: erstes Ende des Turms
- 104: Fundament
- 105: zweites Ende des Turms
- 106: Gondel
- 108: Rotor
- 110: Rotorblatt
- 112: Rotornabe
- 200: Scruton-Wendel
- 201, 202: Segment
- 203: Segmentkörper
- 204: Kopplungsvorrichtung
- 205: Steckvorrichtung
- 206: Seil
- 207: vorspringender Bereich
- 208: Seilkanal
- 209: Zugangsbereich
- 210: Nase
- 211: Haupterstreckungsrichtung des Seilkanals
- 212: Haupterstreckungsrichtung des Zugangsbereichs
- 213: Auflagefläche
- 214: zurückgesetzter Bereich
- 216: Vorsprung
- 217: Ausnehmung
- 219: Winkel
- 220: Längsausdehnungsrichtung des Seils
- 221: Längsausdehnungsrichtung des Segmentkörpers
- 222: erste Seite
- 223: zweite Seite
- 224: Hochrichtung
- 225: Verstärkungsrippe
- 300: System
- 401 - 404: Verfahrensschritte

## Patentansprüche

1. Segment für eine Scruton-Wendel (200), aufweisend:
- einen Segmentkörper (203),
- eine Kopplungsvorrichtung (204) an dem Segmentkörper (203) zum Koppeln des Segments (201) mit einem weiteren Segment (202) für die Scruton-Wendel (200),
- eine Steckvorrichtung (205) an dem Segmentkörper (203) zum Koppeln des Segments (201) mit einem Seil (206).

2. Segment gemäß Anspruch 1, bei dem die Steckvorrichtung (205) einen vorspringenden Bereich (207) aufweist, der ausgebildet ist, das Seil (206) zu hinterhaken.

3. Segment gemäß Anspruch 2, bei dem der vorspringende Bereich (207) einen Seilkanal (208) teilweise umgibt, wobei der Seilkanal (208) ausgebildet ist, das Seil (206) in einem montierten Zustand aufzunehmen, so dass das Segment (201) entlang des Seils (206) verschiebbar ist.

4. Segment gemäß einem der Ansprüche 1 bis 3, bei dem die Steckvorrichtung (205) einen Zugangsbereich (209) aufweist, mittels dessen das Segment (201) auf das Seil (206) aufbringbar und von dem Seil (206) entfernbar ist.

5. Segment gemäß Anspruch 3 und 4, bei dem eine Haupterstreckungsrichtung (211) des Seilkanals (208) und eine Haupterstreckungsrichtung (212) des Zugangsbereichs (209) einen Winkel (219) größer 0° einschließen.

6. Segment gemäß Anspruche 3 und Anspruch 4 oder 5, bei dem der Segmentkörper (203) eine Auflagefläche (213) zur Auflage auf einen Untergrund aufweist und die Steckvorrichtung (205) einen relativ zu der Auflagefläche (213) zurückgesetzten Bereich (214) aufweist, der teilweise den Seilkanal (208) und teilweise den Zugangsbereich (209) ausbildet.

7. Segment gemäß einem der Ansprüche 1 bis 6, bei dem die Kopplungsvorrichtung (204) einen Vorsprung (216) und eine Ausnehmung (217) aufweist, wobei der Vorsprung (216) in eine Ausnehmung (217) des weiteren Segments (202) einbringbar ist zum Koppeln des Segments (201) mit dem weiteren Segment (202) .

8. Segment gemäß einem der Ansprüche 1 bis 7, bei dem der Segmentkörper (203) einen blasgeformten Kunststoffhohlkörper aufweist.

9. System für eine Scruton-Wendel (200), aufweisend:
- ein Seil (206),
- eine Mehrzahl von Segmenten (201, 202) gemäß einem der Ansprüche 1 bis 8, wobei die Segmente (201, 202) jeweils mit dem Seil (206) koppelbar sind und miteinander koppelbar sind.

10. Scruton-Wendel, aufweisend ein System gemäß Anspruch 9, wobei die Segmente (201, 202) mit dem Seil (206) gekoppelt sind und jeweils unmittelbar benachbarte Segmente (201, 202) miteinander gekoppelt sind.

11. Turm für eine Windenergieanlage (100), aufweisend eine Scruton-Wendel (200) gemäß Anspruch 10, wobei die Scruton-Wendel (200) spiral-förmig um den Turm (102) herum angeordnet ist.

12. Verfahren zur Montage einer Scruton-Wendel (200), umfassend:
- Bereitstellen eines Segments (201) gemäß einem der Ansprüche 1 bis 8 und eines Seils (206),
- Aufstecken des Segments (201) auf das Seil (206),
- Drehen des Segments (201) relativ zum Seil (206) und dadurch Koppeln des Segments (201) mit dem Seil (206).

13. Verfahren gemäß Anspruch 12, umfassend:
- Bereitstellen von mindestens einem weiteren Segment (202) gemäß einem der Ansprüche 1 bis 8,
- Aufstecken des weiteren Segments (202) auf das Seil (206),
- Drehen des weiteren Segments (202) relativ zum Seil (206) und dadurch Koppeln des weiteren Segments (202) mit dem Seil (206),
- Verschieben des Segments (201) und des weiteren Segments (202) relativ zu einander entlang des Seils (206) und dadurch Koppeln des Segments (201) und des weiteren Segments (202) miteinander.
